# EUROPÄISCHE PATENTSCHRIFT

(11) **EP 2 949 185 B1**
(45) Veröffentlichungstag und Bekanntmachung des Hinweises auf die Patenterteilung: **21.06.2017**
(21) Anmeldenummer: 14707077.5
(22) Anmeldetag: 20.01.2014
(51) Int. Cl.: H05B 33/08

(54) **LED-MODUL, LEUCHTE UND VERFAHREN ZUM BETREIBEN EINES LED-MODULS**
LED MODULE, LAMP AND METHOD FOR OPERATING A LED MODULE
MODULE À DEL, LUMINAIRE ET PROCÉDÉ DE COMMANDE D'UN MODULE À DEL

(30) Priorität: 23.01.2013 DE 102013201059
(43) Veröffentlichungstag der Anmeldung: 02.12.2015
(73) Patentinhaber: Tridonic GmbH & Co. KG, 6851 Dornbirn (AT)
(72) Erfinder: NESENSOHN, Christian, A-6840 Götzis (AT)
(74) Vertreter: Banzer, Hans-Jörg
(86) Internationale Anmeldenummer: PCT/AT2014/000013
(87) Internationale Veröffentlichungsnummer: WO 2014/113827

(56) Entgegenhaltungen:
- WO-A2-2010/025450
- DE-A1-102010 028 230
- US-A1- 2010 237 786
- US-A1- 2011 133 659
- US-A1- 2012 104 964

## Beschreibung

Die Erfindung betrifft LED-Module, Leuchten mit wenigstens einem LED-Modul und Verfahren zum Betreiben von LED-Modulen.

Energiesparende Leuchten können Leuchtdioden (LEDs) als Leuchtmittel verwenden. Ein LED-Modul kann eine Leuchtdiode oder mehrere Leuchtdioden umfassen. Das LED-Modul kann mit einem Betriebsgerät, beispielsweise einem LED-Konverter, verbunden sein, der das LED-Modul mit Energie versorgt.

Herkömmlich können zusätzliche Funktionen in das Betriebsgerät oder weitere bauliche Einheiten integriert werden, um die Funktion einer LED-basierten Leuchte zu verbessern. Beispielsweise kann das Betriebsgerät so ausgestaltet sein, dass es eine Einrichtung zur Strombegrenzung an seinem Ausgang aufweist. Das Betriebsgerät kann so ausgestaltet sein, dass es für unterschiedliche LED-Module konfigurierbar ist. Dazu kann das Betriebsgerät entsprechende Einstellelemente aufweisen und/oder eine Einrichtung umfassen, die Eigenschaften des LED-Moduls automatisch erkennt. Derartige Ausgestaltungen erhöhen jedoch die Komplexität des Betriebsgeräts und können nicht immer eine an das LED-Modul angepasste Begrenzung des Eingangsstroms des LED-Moduls für alle LED-Module sicherstellen.

Darüber hinaus können die Leuchtdioden eines LED-Moduls auch durch kleine Ströme zum Leuchten angeregt werden. Dies kann dazu führen, dass die Leuchtdioden auch in einem ausgeschalteten Zustand noch leuchten. Dieser Effekt kann beispielsweise als so genanntes Geisterlicht nach dem Ausschalten auftreten. Allgemein wird das Leuchten der Leuchtdioden in einem ausgeschalteten Zustand hier als Glimmen bezeichnet. Eine Ursache für ein derartiges Glimmen kann beispielsweise in Leitungskapazitäten oder einer kapazitiven Kopplung innerhalb des Betriebsgerätes, aber auch in anderen kapazitiven oder induktiven Kopplungen liegen. Zur Unterdrückung von Glimmen kann eine vom Betriebsgerät und vom LED-Modul separate Einrichtung vorgesehen werden. Auch derartige Maßnahmen können Komplexität, Bauraumerfordernisse und Herstellungskosten erhöhen.

Aus der US 2011/0133659 A1 ist ein LED-Modul gemäß dem Oberbegriff des Anspruchs 1 und ein Verfahren gemäß dem Oberbegriff des Anspruchs 13 bekannt. Insbesondere offenbart diese Druckschrift ein Leistungsquellen-Steuerverfahren für ein LED-Modul. Das Verfahren sieht eine Vielzahl parallel angeordneter Beleuchtungsmodule vor, wobei jedes Beleuchtungsmodul eine Vielzahl seriell angeordneter LEDs aufweist. Das hierbei vorgesehene Stromsteuerverfahren sieht ein Detektieren von Signalkennwerten entsprechend einer Vielzahl an Schaltsignalen zum Steuern der Stromleitung in der Vielzahl an Beleuchtungsmodulen und ein Vergleichen der Signalkennwerte mit einem vorbestimmten Wert zum Erzeugen eines Vergleichsergebnisses vor. Ferner ist gemäß diesem Verfahren ein Ausgeben des Vergleichsergebnisses an eine externe Stromversorgungseinrichtung vorgesehen, so dass diese externe Stromversorgungseinrichtung das Spannungsniveau einer Eingangsspannung des LED-Moduls dem Vergleichsergebnis entsprechend anpassen kann.

Aus der DE 10 2010 028 230 A1 ist eine Schaltungsanordnung zum Betreiben von LEDs mit einer pulsierenden Gleichspannung bekannt. Die hierin beschriebene Schaltungsanordnung weist eine Konstantstromquelle auf, die verhindert, dass die Helligkeit der LEDs der Pulsform der Gleichspannung folgt. Die Schaltungsanordnung weist ferner eine Hilfsstromquelle auf, welche die Stromversorgung der LEDs übernimmt, wenn die pulsierende Gleichspannung in den Pulslücken einen vorgegebenen Mindestwert unterschreitet und die Konstantstromquelle inaktiv wird. Die pulsierende Gleichspannung wird dabei mittels eines Brückengleichrichters aus einer Wechselspannung erzeugt, wobei die Wechselspannung vorzugsweise eine Netzwechselspannung ist.

Aus der US 2012/0104964 A1 ist einen LED-Treiber bekannt, welcher für ein PWM-Dimmverfahren ausgestaltet ist. Der LED-Treiber weist einen Dimmsignalgenerator und einen Stromkonverter auf. Dabei ist vorgesehen, dass der Dimmsignalgenerator basierend auf einem gepulsten Eingabesignal ein Dimmsignal erzeugt und dieses dem Stromkonverter bereitstellt. Hierfür weist der Stromkonverter eine Steuerungsschaltung auf, die bei hohem Dimmsignal normal funktioniert und bei niedrigem Dimmsignal die Stromzufuhr zu den LEDs abschaltet.

Aufgabe der Erfindung ist, ein LED-Modul, eine Leuchte und ein Verfahren zum Betreiben eines LED-Moduls bereitzustellen, die Verbesserungen im Hinblick auf zumindest einige der oben beschriebenen Nachteile bietet. Aufgabe ist insbesondere, ein LED-Modul, eine Leuchte und ein Verfahren zum Betrieben eines LED-Moduls bereitzustellen, mit dem das Risiko einer Zerstörung von LEDs zuverlässig verringert und/oder ein Glimmen von Leuchtdioden zuverlässig unterdrückt werden kann, ohne dabei die Komplexität des Betriebsgeräts wesentlich zu erhöhen.

Diese Aufgabe wird gelöst durch ein LED-Modul und ein Verfahren mit den in den unabhängigen Ansprüchen angegebenen Merkmalen. Die abhängigen Patentansprüche definieren Weiterbildungen der Erfindung.

Ein LED-Modul nach einem Ausführungsbeispiel umfasst wenigstens eine Leuchtdiode und einen Eingangsanschluss zur Kopplung des LED-Moduls mit einem Betriebsgerät. Das LED-Modul umfasst weiterhin ein steuerbares Schaltmittel, das mit dem Eingangsanschluss und der wenigstens einen Leuchtdiode gekoppelt ist. Das LED-Modul weist eine Steuerschaltung zum Steuern des steuerbaren Schaltmittels auf. Die Steuerschaltung ist eingerichtet, um das steuerbare Schaltmittel abhängig von zu übertragenden Daten zu schalten, um die zu übertragenden Daten über eine Versorgungsleitung des LED-Moduls von dem LED-Modul an das Betriebsgerät zu übertragen.

Durch Integration des steuerbaren Schaltmittels in das LED-Modul können Funktionen wie Begrenzung des den Leuchtdioden zugeführten Stroms, Unterdrückung von Restlicht und/oder Kommunikation zwischen LED-Modul und Betriebsgerät über eine Versorgungsleitung in einfacher und auf das jeweilige LED-Modul abgestimmter Weise realisiert werden. Beispielsweise kann das Schaltmittel so betätigt werden, dass das Auftreten von zu großen Strömen durch die wenigstens eine Leuchtdiode und/oder zu gro-ßen Spannungen unterbunden wird. Alternativ oder zusätzlich kann das Schaltmittel so betätigt werden, dass in einem Standby-Modus ein Glimmen der wenigstens einen Leuchtdiode reduziert wird. Alternativ oder zusätzlich kann das Schaltmittel so betätigt werden, dass eine Datenübertragung von dem LED-Modul zu dem Betriebsgerät über eine Versorgungsleitung des LED-Moduls stattfindet.

Das LED-Modul kann als bauliche Einheit ausgestaltet sein, wobei die wenigstens eine Leuchtdiode auf einer Trägerplatte angeordnet sein kann. Die Trägerplatte kann eine Leiterplatte sein, auf der elektrisch leitende Verbindungen vorgesehen sind. Das steuerbare Schaltmittel kann auf derselben Trägerplatte wie die wenigstens eine Leuchtdiode angeordnet sein.

Das steuerbare Schaltmittel kann eingerichtet sein, um eine elektrisch leitende Verbindung zwischen dem Eingangsanschluss und der wenigstens einen Leuchtdiode zu unterbrechen. Das steuerbare Schaltmittel kann einen Transistor, beispielsweise einen Bipolartransistor oder einen Transistor mit isolierter Gateelektrode umfassen, der in einen hochohmigen Zustand schaltbar ist, um eine elektrisch leitende Verbindung zwischen dem Eingangsanschluss und der wenigstens einen Leuchtdiode zu unterbrechen.

Das steuerbare Schaltmittel kann zwischen den Eingangsanschluss und eine Anode einer Leuchtdiode geschaltet sein, um die elektrisch leitende Verbindung zwischen dem Eingangsanschluss und der Anode der Leuchtdiode zu unterbrechen. Dadurch wird insbesondere eine wirksame Überstrombegrenzung möglich.

Das LED-Modul kann so eingerichtet sein, dass das steuerbare Schaltmittel die elektrisch leitende Verbindung zwischen dem Eingangsanschluss und der wenigstens einen Leuchtdiode abhängig von einer Eingangsspannung des LED-Moduls unterbricht. Das steuerbare Schaltmittel kann selektiv dann in einen Aus-Zustand geschaltet werden, wenn eine Eingangsspannung des LED-Moduls einen Schwellenwert übersteigt. Alternativ oder zusätzlich kann das steuerbare Schaltmittel für eine vorherbestimmte Zeitdauer in den Aus-Zustand geschaltet werden, nachdem die Eingangsspannung des LED-Moduls den Schwellenwert übersteigt. Dadurch wird eine Überstrombegrenzung realisiert.

Das LED-Modul kann eingerichtet sein, um durch Unterbrechen der elektrisch leitenden Verbindung die wenigstens eine Leuchtdiode gegen eine Überspannung oder einen Überstrom zu schützen.

Das LED-Modul kann alternativ oder zusätzlich so eingerichtet sein, dass das steuerbare Schaltmittel die elektrisch leitende Verbindung zwischen dem Eingangsanschluss und der wenigstens einen Leuchtdiode in einem Standby-Modus unterbricht. Dadurch kann ein unerwünschtes Glimmen der wenigstens einen Leuchtdiode verringert werden.

Das LED-Modul kann so eingerichtet sein, dass das steuerbare Schaltmittel die elektrisch leitende Verbindung zwischen dem Eingangsanschluss und der wenigstens einen Leuchtdiode unterbricht, wenn eine Eingangsspannung des LED-Moduls kleiner als ein weiterer Schwellenwert ist.

Die Steuerschaltung kann eingerichtet sein, um das Schaltmittel so zu steuern, dass eine durch die wenigstens eine Leuchtdiode fließende Stromstärke ein vorgegebenes Kriterium erfüllt, insbesondere die Leuchtdiode nicht zerstört. Alternativ oder zusätzlich kann die Steuerschaltung eingerichtet sein, um das Schaltmittel so zu steuern, dass im Standby-Modus ein Glimmen der wenigstens einen Leuchtdiode unterbunden wird. Die Steuerschaltung kann eingerichtet sein, um das steuerbare Schaltmittel abhängig von einer Eingangsspannung des LED-Moduls zu schalten.

Die Steuerschaltung kann so eingerichtet sein, dass die zu übertragenden Daten anzeigen, für welche Eingangsspannung und/oder welche Stromstärke das LED-Modul ausgelegt ist. Die Steuerschaltung kann so eingerichtet sein, dass die zu übertragenden Daten einen Code umfassen, der einen Typ des LED-Modul angibt. Die Daten können abhängig von Sensorwerten übertragen werden, die ein Sensor des LED-Moduls erfasst.

Nach einem weiteren Ausführungsbeispiel wird ein LED-Modul angegeben, das wenigstens eine Leuchtdiode und eine Strombegrenzungseinrichtung zum Begrenzen eines durch die wenigstens eine Leuchtdiode fließenden Stroms umfasst. Die Strombegrenzungseinrichtung kann zwischen einen Eingangsanschluss des LED-Moduls und eine Anode einer Leuchtdiode geschaltet sein. Die Strombegrenzungseinrichtung kann ein steuerbares Schaltmittel umfassen. Die Strombegrenzungseinrichtung kann eine Induktivität umfassen. Die Strombegrenzungseinrichtung kann wenigstens einen Transistor umfassen.

Nach einem weiteren Ausführungsbeispiel wird ein LED-Modul angegeben, das wenigstens eine Leuchtdiode und eine Anti-Glimm-Einrichtung zum Unterdrücken von Glimmen der wenigstens einen Leuchtdiode umfasst. Die Anti-Glimm-Einrichtung kann mit einem Eingangsanschluss des LED-Moduls und einer Leuchtdiode gekoppelt sein. Die Anti-Glimm-Einrichtung kann ein steuerbares Schaltmittel umfassen, das abhängig davon geschaltet wird, ob ein Standby-Modus vorliegt.

Eine Leuchte nach einem Ausführungsbeispiel umfasst ein Betriebsgerät, insbesondere einen LED-Konverter, und ein LED-Modul nach einem Ausführungsbeispiel. Ein Eingangsanschluss des LED-Moduls ist über eine Versorgungsleitung mit dem Betriebsgerät verbunden.

Das Betriebsgerät kann eine Ausgangsanschluss und eine mit dem Ausgangsanschluss gekoppelte Auswerteschaltung aufweisen. Die Auswerteschaltung kann eingerichtet sein, um eine Spannung und/oder einen Strom an dem Ausgangsanschluss des Betriebsgeräts zu überwachen, um über die Versorgungsleitung von dem LED-Modul übertragene Daten auszulesen. Das Betriebsgerät kann eingerichtet sein, um abhängig von den übertragenen Daten zu arbeiten. Das Betriebsgerät kann einen Wandler umfassen und kann eingerichtet sein, um den Wandler abhängig von den von dem LED-Modul über die Versorgungsleitung übertragenen Daten zu steuern oder zu regeln. Das Betriebsgerät kann einen SELV ("Separated extra-low voltage")-Bereich aufweisen, wobei die Auswerteschaltung in dem SELV-Bereich vorgesehen ist.

Ein Verfahren zum Betreiben eines LED-Moduls, das einen Eingangsanschluss und wenigstens eine Leuchtdiode umfasst, nach einem Ausführungsbeispiel umfasst ein Schalten wenigstens eines steuerbaren Schaltmittels des LED-Moduls, das mit dem Eingangsanschluss und der wenigstens einen Leuchtdiode gekoppelt ist. Das Verfahren umfass ferner ein Steuern des steuerbaren Schaltmittels durch eine Steuerschaltung, wobei die Steuerschaltung des steuerbaren Schaltmittels abhängig von zu übertragenden Daten schaltet, um die zu übertragenden Daten über eine Versorgungsleitung des LED-Moduls von dem LED-Modul an das Betriebsgerät zu übertragen.

Das steuerbare Schaltmittel kann zwischen dem Eingangsanschluss und die wenigstens einen Leuchtdiode geschaltet sein. Das steuerbare Schaltmittel kann so geschaltet werden, dass eine elektrisch leitende Verbindung zwischen dem Eingangsanschluss und der wenigstens einen Leuchtdiode unterbrochen wird. Dazu kann das steuerbare Schaltmittel in einen hochohmigen Zustand geschaltet werden.

Das steuerbare Schaltmittel kann so geschaltet werden, dass ein durch die wenigstens eine Leuchtdiode fließender Strom ein vorgegebenes Kriterium erfüllt, insbesondere nicht zur Zerstörung der wenigstens einen Leuchtdiode führt. Das steuerbare Schaltmittel kann so geschaltet werden, dass die wenigstens eine Leuchtdiode von dem Eingangsanschluss abgekoppelt wird, so lange eine Eingangsspannung des LED-Moduls größer als ein Schwellenwert ist und/oder bis eine vorgegebene Zeitdauer seit dem Bereitstellen einer Eingangsspannung an das LED-Modul vergangen ist.

Alternativ oder zusätzlich kann das steuerbare Schaltmittel abhängig davon geschaltet werden, ob ein Standby-Modus vorliegt. Das steuerbare Schaltmittel kann so geschaltet werden, dass in dem Standby-Modus die wenigstens eine Leuchtdiode von dem Eingangsanschluss abgekoppelt wird. Dadurch kann ein Glimmen der wenigstens einen Leuchtdiode reduziert werden.

Alternativ oder zusätzlich kann das steuerbare Schaltmittel abhängig von zu übertragenden Daten geschaltet werden, um die Daten über eine Versorgungsleitung an ein Betriebsgerät, insbesondere einen LED-Konverter, zu übertragen. Das Betriebsgerät kann abhängig von den vom LED-Modul übertragenen Daten arbeiten, um einen Ausgangsstrom und/oder eine Ausgangsspannung des Betriebsgeräts an das LED-Modul anzupassen.

Weitere Merkmale von Verfahren nach Ausführungsbeispielen und die damit jeweils erzielten Wirkungen entsprechen den zusätzlichen Merkmalen von LED-Modulen nach Ausführungsbeispielen. Das Verfahren kann von einem LED-Modul nach einem Ausführungsbeispiel durchgeführt werden.

Weitere Merkmale, Vorteile und Funktionen von Ausführungsbeispielen der Erfindung werden aus der nachfolgenden detaillierten Beschreibung anhand der beigefügten Zeichnungen ersichtlich, in denen gleiche oder ähnliche Bezugszeichen Einheiten mit gleicher oder ähnlicher Funktion bezeichnen.
Fig. 1 ist eine schematische Darstellung einer Leuchte mit einem LED-Modul nach einem Ausführungsbeispiel der Erfindung.
Fig. 2 ist ein Flussdiagramm eines Verfahrens nach einem Ausführungsbeispiel.
Fig. 3 zeigt eine Eingangsspannung eines LED-Moduls und einen durch Leuchtdioden des LED-Moduls fließenden Strom für ein LED-Modul nach einem Ausführungsbeispiel.
Fig. 4 zeigt eine Eingangsspannung eines LED-Moduls und einen durch Leuchtdioden des LED-Moduls fließenden Strom für ein LED-Modul nach einem weiteren Ausführungsbeispiel.
Fig. 5 ist eine schematische Darstellung einer Leuchte mit einem LED-Modul nach einem Ausführungsbeispiel der Erfindung.
Fig. 6 ist ein Flussdiagramm eines Verfahrens nach einem Ausführungsbeispiel.

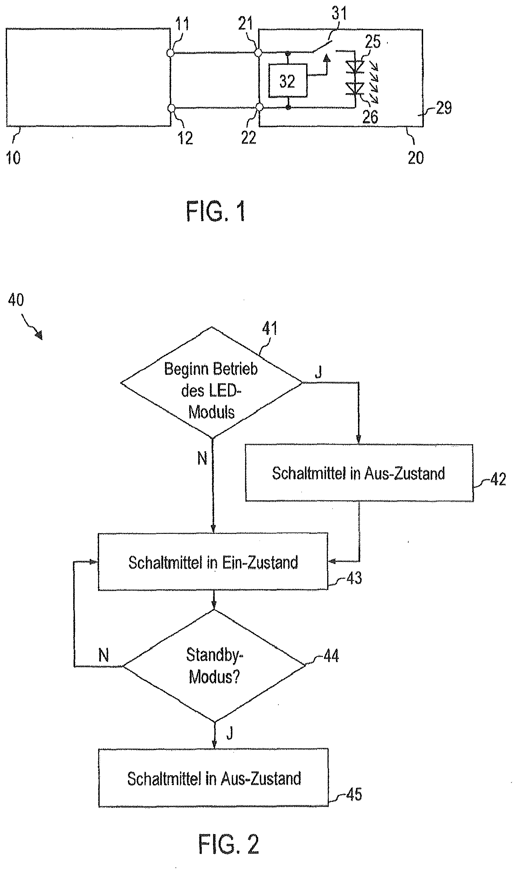

Fig. 1 zeigt eine Leuchte mit einem LED-Modul 20 nach einem Ausführungsbeispiel. Die Leuchte umfasst das LED-Modul 20 und ein Betriebsgerät 10. Das LED-Modul 20 ist über Versorgungsleitungen mit dem Betriebsgerät 10 verbunden und wird von diesem mit Energie versorgt. Das Betriebsgerät 10 und das LED-Modul 20 können in einer Leuchte verbaut sein. Bei weiteren Ausführungsbeispielen kann das Betriebsgerät 10 auch getrennt von dem LED-Modul 20 montiert sein. Das Betriebsgerät 10 kann als LED-Konverter ausgestaltet sein. Das Betriebsgerät 10 kann als Konstantstromquelle oder Konstantspannungsquelle ausgestaltet sein. Ausgangsanschlüsse 11, 12 des Betriebsgeräts 10 sind mit Eingangsanschlüssen 21, 22 des LED-Moduls 20 verbunden.

Das LED-Modul 20 weist eine Leuchtdiode oder mehrere Leuchtdioden 25, 26 auf. Die Leuchtdioden 25, 26 können zu einer LED-Strecke oder mehreren LED-Strecken verschaltet sein. Es kann eine beliebige Anzahl von Leuchtdioden 25, 26 verwendet werden. Die Leuchtdioden 25, 26 können anorganische Leuchtdioden oder organische Leuchtdioden sein. Im Betrieb des LED-Moduls 20 wird von dem Betriebsgerät 10 eine Versorgungsspannung oder ein Versorgungsstrom bereitgestellt, um eine Lichtabgabe durch die Leuchtdioden 25, 26 zu veranlassen.

Das LED-Modul 25, 26 weist ein steuerbares Schaltmittel 31 auf. Das steuerbare Schaltmittel 31 ist mit wenigstens einer der Leuchtdioden und einem Eingangsanschluss 21 gekoppelt. Das steuerbare Schaltmittel 31 kann so vorgesehen sein, dass es die Leuchtdiode(n) des LED-Moduls 20 von dem Eingangsanschluss 21 abkoppeln kann. Das steuerbare Schaltmittel 31 kann mit einer Serienschaltung von Leuchtdioden in Serie verschaltet sein. Das steuerbare Schaltmittel 31 kann zwischen den Eingangsanschluss 21 und die Anode der ersten Leuchtdiode der Serienschaltung geschaltet sein. Das steuerbare Schaltmittel 31 kann einen Leistungsschalter umfassen. Das steuerbare Schaltmittel 31 kann einen Transistor, beispielsweise einen Bipolartransistor, einen Transistor mit isolierter Gateelektrode, ein MOSFET oder andere steuerbare Halbleiterschalter umfassen. Um die Leuchtdiode(n) des LED-Moduls 20 von dem Eingangsanschluss 21 abzukoppeln, kann das steuerbare Schaltmittel 31 in einen hochohmigen Zustand geschaltet werden. Dazu kann das Potenzial an der Gateelektrode des steuerbaren Schaltmittels 31 entsprechend eingestellt werden. Dieser Zustand wird nachfolgend auch als Aus-Zustand des steuerbaren Schaltmittels 31 bezeichnet.

Wie nachfolgend beschrieben wird, kann das steuerbare Schaltmittel 31 in einen Aus-Zustand geschaltet werden, um die Leuchtdiode(n) des LED-Moduls 20 Überströme zu schützen. Alternativ oder zusätzlich kann das steuerbare Schaltmittel 31 in einen Aus-Zustand geschaltet werden, um ein Glimmen der Leuchtdiode(n) in einem ausgeschaltet Zustand zu verringern. Da das steuerbare Schaltmittel 31 in das LED-Modul 20 integriert ist, können die entsprechenden Maßnahmen zum Schutz vor Überspannungen oder Überströmen und/oder zum Verringern von Glimmen abgestimmt auf das jeweilige LED-Modul 20 vorgenommen werden. Beispielsweise kann das steuerbare Schaltmittel 31 so geschaltet werden, dass ein Schutz vor Überspannungen oder Überströmen und/oder ein Verringern von Glimmen abgestimmt auf die Anzahl und Ausgestaltung der Leuchtdioden, abhängig von einer Fläche des LED-Moduls 20 und/oder abhängig von anderen Parametern des LED-Moduls 20 erfolgt.

Das LED-Modul 20 kann so ausgestaltet sein, dass das steuerbare Schaltmittel 31 abhängig von einem Betriebszustand des LED-Moduls 20 und/oder des Betriebsgeräts 10 gesteuert wird. Dazu kann eine Steuerschaltung 32 das steuerbare Schaltmittel 31 abhängig von einer Eingangsspannung des LED-Moduls 20 steuern. Die Steuerschaltung 32 kann einen Spannungsteiler umfassen, um eine Spannung an einer Gateelektrode des Schaltmittels 31 abhängig von einer Eingangsspannung des LED-Moduls 20 zu kontrollieren. Die Steuerschaltung 32 kann eine integrierte Halbleiterschaltung umfassen. Die Steuerschaltung 32 kann einen Mikrocontroller oder Controller umfassen. Die Steuerschaltung 32 kann so ausgestaltet sein, dass sie das steuerbare Schaltmittel 31 abhängig von Eigenschaften der Leuchtdiode(n) des LED-Moduls 20, insbesondere abhängig von zulässigen Spannungen und/oder Stromstärken einer Serienschaltung von Leuchtdioden des LED-Moduls 20, steuert. Die Steuerschaltung 32 kann als Last wirken oder eine Last umfassen, über die eine Überspannung abgebaut werden kann, während das steuerbare Schaltmittel 31 in den Aus-Zustand geschaltet ist.

Das LED-Modul 20 kann so ausgestaltet sein, dass das steuerbare Schaltmittel 31 so geschaltet wird, dass die Leuchtdiode(n) 25, 26 des LED-Moduls 20 gegen Überspannungen oder Überströme geschützt werden. Das LED-Modul 20 kann so ausgestaltet sein, dass das steuerbare Schaltmittel 31 die Leuchtdiode(n) des LED-Moduls 20 von dem Eingangsanschluss 21 abkoppelt, wenn eine Eingangsspannung an den Eingangsanschlüssen 21, 22 des LED-Moduls 20 größer als ein Schwellenwert ist. Das steuerbare Schaltmittel 31 kann die Leuchtdiode(n) des LED-Moduls 20 von dem Eingangsanschluss 21 abkoppeln, wenn eine Eingangsspannung an den Eingangsanschlüssen 21, 22 des LED-Moduls 20 größer als eine Vorwärtsspannung der Serienschaltung von Leuchtdioden ist. Das steuerbare Schaltmittel 31 kann die Leuchtdiode(n) des LED-Moduls 20 von dem Eingangsanschluss 21 abkoppeln, wenn das Betriebsgerät 10 beginnt, eine Eingangsspannung an das LED-Modul 20 bereitzustellen. Das steuerbare Schaltmittel 31 kann die Leuchtdiode(n) des LED-Moduls 20 von dem Eingangsanschluss 21 wenigstens für ein vorgegebenes Zeitintervall abkoppeln, wenn die Eingangsspannung des LED-Moduls größer als ein Schwellenwert ist. Das LED-Modul 20 kann so ausgestaltet sein, dass, das steuerbare Schaltmittel 31 als Strombegrenzer wirkt, der den durch die Leuchtdiode(n) fließenden Strom auf einen zulässigen Maximalwert begrenzt.

Alternativ oder zusätzlich kann das LED-Modul 20 kann so ausgestaltet sein, dass das steuerbare Schaltmittel 31 die Leuchtdiode(n) des LED-Moduls 20 von dem Eingangsanschluss 21 abkoppelt, wenn ein Standby-Modus aktiviert ist. Das LED-Modul 20 kann so ausgestaltet sein, dass das steuerbare Schaltmittel 31 die Leuchtdiode(n) des LED-Moduls 20 von dem Eingangsanschluss 21 abkoppelt, wenn eine Eingangsspannung an den Eingangsanschlüssen 21, 22 des LED-Moduls 20 einen Betrag aufweist, der kleiner als ein Schwellenwert ist.

Die Leuchtdiode(n) 25, 26 des LED-Moduls 20 und das steuerbare Schaltmittel 31 können auf einem gemeinsamen Träger 29 angebracht sein. Beispielsweise können die Leuchtdiode(n) 25, 26 und das steuerbare Schaltmittel 31 an derselben Leiterplatte angebracht sein.

Fig. 2 ist ein Flussdiagramm eines Verfahrens 40 nach einem Ausführungsbeispiel. Das Verfahren 40 kann von einem LED-Modul nach einem Ausführungsbeispiel automatisch ausgeführt werden.

Bei Schritt 41 wird überprüft, ob ein Betriebszustand vorliegt, an dem Überspannungen oder Überströme auftreten können. Dazu kann insbesondere überprüft werden, ob ein Betrieb des LED-Moduls 20 dadurch eingeleitet wird, dass das Betriebsgerät 10 eine Eingangsspannung an das LED-Modul 20 bereitstellt.

Bei Schritt 42 wird ein Mechanismus zur Überstrombegrenzung eingeleitet, wenn bei Schritt 41 ermittelt wurde, dass Überspannungen oder Überströme auftreten können. Dazu kann das steuerbare Schaltmittel 31 so gesteuert werden, dass es die Leuchtdiode(n) 25, 26 von dem Eingangsanschluss abkoppelt. Das steuerbare Schaltmittel 31 kann dazu in einen hochohmigen Zustand geschaltet werden, um so eine elektrisch leitende Verbindung zwischen dem Eingangsanschluss 21 und den Leuchtdioden 25, 26 zu unterbrechen. Das steuerbare Schaltmittel 31 kann in den Aus-Zustand geschaltet bleiben, bis die Eingangsspannung des LED-Moduls einen Schwellenwert erreicht oder unterschreitet und/oder bis ein vorgegebenes Zeitintervall verstrichen ist, seit eine Eingangsspannung an den Eingangsanschlüssen 21, 22 anlegt.

Bei Schritt 43 wird das steuerbare Schaltmittel 31 in einen Ein-Zustand geschaltet. Dadurch wird ein Widerstand der Verbindung zwischen dem Eingangsanschluss 21 und der Anode der Leuchtdiode 25 verringert.

Durch die Schritte 41-43 kann eine Überstrombegrenzung erreicht werden. Ein Stromfluss durch die Leuchtdiode(n) 25, 26 wird durch das Schaltmittel 31 des LED-Moduls so begrenzt, dass nur zulässige Stromstärken auftreten. Zusätzlich oder alternativ kann das steuerbare Schaltmittel 31 auch so gesteuert werden, dass ein Glimmen der Leuchtdiode(n) 25, 26 des LED-Moduls 20 unterdrückt wird, wie unter Bezugnahme auf die Schritte 44-45 näher beschrieben wird.

Bei Schritt 44 wird überwacht, ob ein Standby-Modus des LED-Moduls 20 oder des Betriebsgeräts 10 aktiviert ist. Dazu kann die Eingangsspannung des LED-Moduls 20 überwacht werden. Insbesondere kann die Eingangsspannung des LED-Moduls 20 mit einem weiteren Schwellenwert verglichen werden. Wenn ein Standby-Modus aktiviert ist, wird bei Schritt 45 das steuerbare Schaltmittel 31 in den Aus-Zustand geschaltet. Dadurch können die Leuchtdioden des LED-Moduls 20 im Standby-Modus von der mit dem Eingangsanschluss 21 gekoppelten Versorgungsleitung abgekoppelt werden. Ein Glimmen der Leuchtdioden, das durch eine Induktivität oder Kapazität der Versorgungsleitung oder durch induktive oder kapazitive Kopplungen des Betriebsgeräts 10 hervorgerufen werden kann, kann so reduziert werden.

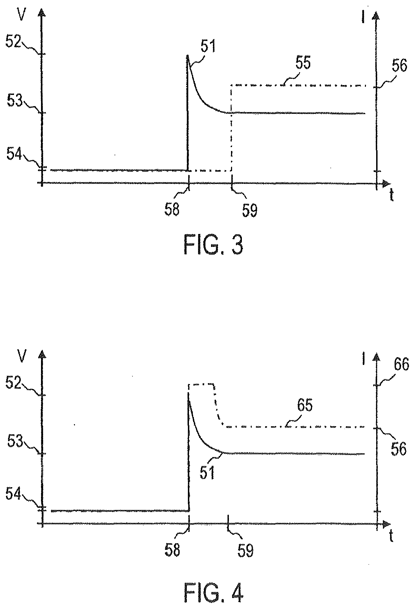

Fig. 3 und Fig. 4 zeigen eine Eingangsspannung 51 des LED-Moduls und eine Stromstärke 55, 65 durch die Leuchtdiode(n) für ein LED-Modul nach Ausführungsbeispielen. Dabei stellt das Betriebsgerät 10 ab einem Zeitpunkt 58 eine Spannung zum Betrieb des LED-Moduls 20 bereit, so dass die Eingangsspannung 51 des LED-Moduls ansteigt. Das LED-Modul 20 wird zu dem Zeitpunkt 58 an die Energieversorgung angekoppelt. Der Spannungswert 52 kann so hoch sein, dass er zu einer Beschädigung der Leuchtdiode(n) des LED-Moduls 20 führen kann.

Fig. 3 illustriert die Stromstärke 56 durch die Leuchtdiode(n) des LED-Moduls 20 nach einem Ausführungsbeispiel. Das steuerbare Schaltmittel 31 wird so gesteuert, dass die Anode einer Leuchtdiode 25 erst dann elektrisch leitend mit dem Eingangsanschluss 21 verbunden wird, wenn die Eingangsspannung 51 einen zulässigen Spannungswert 53 aufweist. Das steuerbare Schaltmittel 51 kann in einen Aus-Zustand geschaltet werden, bis zu einem weiteren Zeitpunkt 59 eine vorgegebene Zeitdauer ab dem Zeitpunkt 58 verstrichen ist, an dem das Betriebsgerät 10 die Spannung bereitstellt. Alternativ kann das steuerbare Schaltmittel 31 abhängig von einem Schwellenwertvergleich der Eingangsspannung 51 in den Ein-Zustand geschaltet werden, beispielsweise wenn die Eingangsspannung 51 einer Vorwärtsspannung 53 der Strecke von Leuchtdioden entspricht. Die Stromstärke 55 des durch die Leuchtdioden fließenden Stroms steigt an, wenn das steuerbare Schaltmittel 31 zum Zeitpunkt 59 in den Ein-Zustand geschaltet wird. Durch das selektive Ankoppeln der Leuchtdiode(n) des LED-Moduls erst ab dem Zeitpunkt 59 erfolgt eine wirksame Begrenzung der Stromstärke auf einen Wert 56. Eine Überspannung kann zwischen den Zeitpunkten 58 und 59 beispielsweise über eine Last der Steuerschaltung 32 abgebaut werden.

Fig. 4 illustriert die Stromstärke 65 durch die Leuchtdioden für ein LED-Modul, bei dem das steuerbare Schaltmittel 31 den Stromfluss von dem Eingangsanschluss 21 durch die Leuchtdiode(n) des LED-Moduls nicht vollständig unterbricht. Das steuerbare Schaltmittel wirkt dabei als Strombegrenzer, der eine Stromstärke des durch die Leuchtdiode(n) fließenden Stroms auf einen Wert 66 begrenzt, bis die Versorgungsspannung auf die Vorwärtsspannung 53 abgefallen ist.

Zum Unterdrücken von Glimmen der Leuchtdiode(n) des LED-Moduls 20 kann die Eingangsspannung des LED-Moduls 20 mit einem weiteren Schwellenwert 54 verglichen werden. Wenn die Eingangsspannung den weiteren Schwellenwert 54 unterschreitet, liegt ein Standby-Modus vor. Das steuerbare Schaltmittel kann so gesteuert werden, dass die Leuchtdiode(n) von dem Eingangsanschluss 21 des LED-Moduls 20 abgekoppelt werden, wenn die Eingangsspannung kleiner als der weitere Schwellenwert 54 ist.

Zusätzlich oder alternativ zur Überstrombegrenzung und Glimmunterdrückung kann das steuerbare Schaltmittel 31 auch geschaltet werden, um Daten von dem LED-Modul 20 zu dem Betriebsgerät 10 über die Versorgungsleitung des LED-Moduls 20 zu übertragen. Durch Steuern des Schaltmittels können die Daten auf Signale in den Versorgungsleitungen aufmoduliert werden. Die Daten können dem Betriebsgerät 10 Parameter des LED-Moduls 20 anzeigen. Beispielsweise können die Daten eine zulässige Eingangsspannung des LED-Moduls, einen zulässige Eingangsstrom des Betriebsgeräts und/oder andere Parameter des LED-Moduls anzeigen. Die Daten können auch Sensorwerte eines auf dem LED-Modul angebrachten Sensors beinhalten, beispielsweise Temperaturwerte, die mit einem Temperatursensor des LED-Moduls erfasst werden. Das Betriebsgerät kann die Versorgung des LED-Moduls abhängig von den übermittelten Daten anpassen.

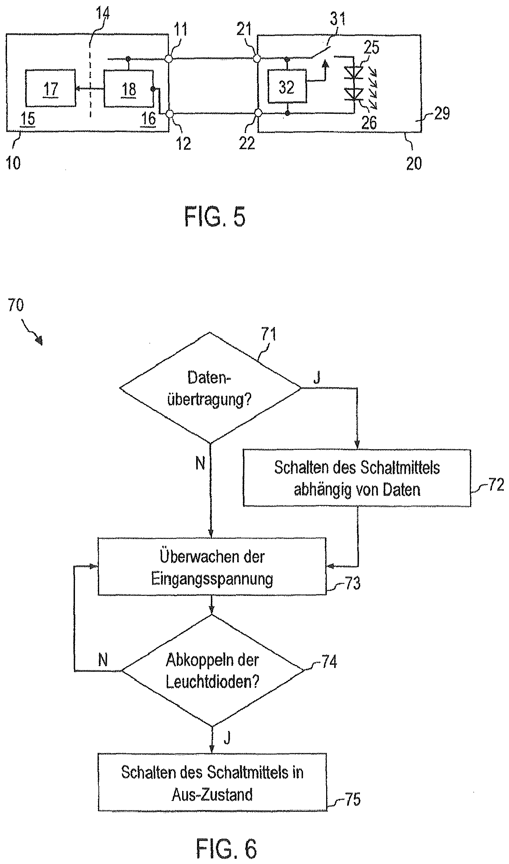

Fig. 5 ist eine Darstellung einer Leuchte mit dem Betriebsgerät 10 und dem LED-Modul 20. Das LED-Modul 20 kann wie unter Bezugnahme auf Fig. 1 bis Fig. 4 beschrieben ausgestaltet sein. Die in das LED-Modul 20 integrierte Steuerschaltung 32 kann eingerichtet sein, um das steuerbare Schaltmittel 31 zur Datenübertragung zu schalten. Die Steuerschaltung 32 kann eingerichtet sein, um das steuerbare Schaltmittel 31 abhängig von zu übertragenden Daten zu steuern, wenn das Betriebsgerät 10 eine derartige Datenübertragung anfordert. Dazu kann die Steuerschaltung 32 abhängig von der Eingangsspannung des LED-Moduls 20 erkennen, ob eine Sequenz von Schaltvorgängen zur Datenübertragung eingeleitet werden soll.

Das Betriebsgerät 10 kann ein LED-Konverter sein. Das Betriebsgerät 10 kann einen Wandler umfassen. Das Betriebsgerät 10 kann einen Primärseite 15 und eine davon galvanisch getrennte Sekundärseite 16 umfassen, wobei die Sekundärseite beispielsweise als SELV ("safety extra-low voltage")-Bereich des Betriebsgeräts 10 ausgestaltet sein kann. Der Betrieb des Wandlers kann durch eine Steuereinrichtung 17 an der Primärseite 15 des Betriebsgeräts 10 gesteuert oder geregelt werden. Die Steuereinrichtung 17 kann als Halbleiterschaltung ausgestaltet sein und kann beispielsweise einen Controller oder Mikrocontroller umfassen.

Eine Auswerteschaltung 18 an der Sekundärseite 16 des Betriebsgeräts 10 ist mit den Ausgangsanschlüssen 11, 12 des Betriebsgeräts 10 gekoppelt und erfasst die von dem LED-Modul 20 über die Versorgungsleitungen übertragenen Daten. Dazu kann die Auswerteschaltung 18 eingerichtet sein, um die von dem LED-Modul aufmodulierten Signale zu erkennen. Die Datenübertragung von dem LED-Modul 20 zu dem Betriebsgerät 10 kann analog oder digital erfolgen. Die Auswerteschaltung 18 kann die übertragenen Daten über eine galvanische Trennung 14 an die Steuereinrichtung 17 bereitstellen. Die Steuereinrichtung 17 kann den Betrieb des Wandlers abhängig von den übertragenen Daten steuern oder regeln. Beispielsweise kann eine Steuerung oder Regelung des Ausgangsstroms oder der Ausgangsspannung abhängig von den über die Versorgungsleitung übertragenen Daten erfolgen.

Fig. 6 ist ein Flussdiagramm eines Verfahrens 70 nach einem Ausführungsbeispiel. Das Verfahren 70 kann von einem LED-Modul nach einem Ausführungsbeispiel automatisch ausgeführt werden.

Bei Schritt 71 wird überprüft, ob Daten über die Versorgungsleitung von dem LED-Modul 20 zu dem Betriebsgerät 10 übertragen werden sollen. Dazu kann eine Eingangsspannung des LED-Moduls 20 überwacht werden. Das Betriebsgerät 10 kann eine Datenübertragung anfordern, beispielsweise durch Bereitstellen einer bestimmten Eingangsspannung des LED-Moduls 20.

Falls eine Datenübertragung erfolgen soll, wird bei Schritt 72 das steuerbare Schaltmittel 31 geschaltet. Es kann eine Sequenz von Schaltvorgängen durchgeführt werden, die von den zu übertragenden Daten abhängt. Die Daten können Informationen über das LED-Modul beinhalten. Das Schalten des steuerbaren Schaltmittels 31 kann so erfolgen, dass ein Signal auf die Versorgungsleitung aufmoduliert wird. Die Daten können analog oder digital übertragen werden.

Im anschließenden Betrieb des LED-Moduls kann das steuerbare Schaltmittel 31 optiönal gesteuert werden, um eine Überstrombegrenzung und/oder eine Unterdrückung von Glimmen zu erreichen. Bei Schritt 73 kann dazu eine Eingangsspannung des LED-Moduls überwacht werden. Bei Schritt 74 kann abhängig von der Eingangsspannung bestimmt werden, ob die Leuchtdiode(n) des LED-Moduls 20 von dem Eingangsanschluss 21 abgekoppelt werden sollen. Dazu kann die Eingangsspannung mit einem Schwellenwert verglichen werden, um bei zu großer Eingangsspannung eine Überstrombegrenzung durchzuführen. Alternativ oder zusätzlich kann die Eingangsspannung mit einem weiteren Schwellenwert verglichen werden, um bei kleiner Eingangsspannung ein Glimmen der Leuchtdioden zu unterdrücken. Zur Überstrombegrenzung und/oder zum Unterdrücken von Glimmen der Leuchtdioden kann bei Schritt 75 das steuerbare Schaltmittel in den Aus-Zustand geschaltet werden.

Während LED-Module und Verfahren nach Ausführungsbeispielen unter Bezugnahme auf die Figuren detailliert beschrieben wurden, können Abwandlungen bei weiteren Ausführungsbeispielen realisiert werden. Während beispielsweise Ausführungsbeispiele detailliert beschrieben wurden, bei denen das steuerbare Schaltmittel einen Stromfluss zwischen einem Eingangsanschluss des LED-Moduls und einer Anode einer Leuchtdiode unterbrechen kann, kann bei weiteren Ausgestaltungen auch auf andere Weise ein Widerstand zwischen dem Eingangsanschluss und der Anode einer Leuchtdiode erhöht werden, um eine Überstrombegrenzung zu realisieren und/oder ein Glimmen der Leuchtdioden zu unterdrücken. Das LED-Modul muss nicht so ausgestaltet sein, dass durch Steuerung des Schaltmittels sowohl eine Überstrombegrenzung realisiert als auch ein Glimmen der Leuchtdioden im Standby-Modus unterdrückt wird. Das steuerbare Schaltmittel kann auch mehrere steuerbare Schalter, beispielsweise mehrere Leistungsschalter umfassen. Unterschiedliche steuerbare Schalter können gesteuert werden, um einerseits eine Überstrombegrenzung zu realisieren und andererseits ein Glimmen der Leuchtdioden im Standby-Modus zu unterdrücken.

LED-Module und Verfahren nach Ausführungsbeispielen können insbesondere zum Betreiben von Leuchten, die LEDs umfassen, eingesetzt werden, ohne darauf beschränkt zu sein.

## Patentansprüche

1. LED-Modul, umfassend:
wenigstens eine Leuchtdiode (25, 26),
einen Eingangsanschluss (21) zur Kopplung des LED-Moduls (20) mit einem Betriebsgerät (10) und
ein steuerbares Schaltmittel (31), das mit dem Eingangsanschluss (21) und der wenigstens einen Leuchtdiode (25, 26) gekoppelt ist,
**gekennzeichnet dadurch, dass** das LED-Modul ferner umfasst:
eine Steuerschaltung (32) zum Steuern des steuerbaren Schaltmittels (31), wobei die Steuerschaltung (32) eingerichtet ist, um das steuerbare Schaltmittel (31) abhängig von zu übertragenden Daten zu schalten, um die zu übertragenden Daten über eine Versorgungsleitung des LED-Moduls (20) von dem LED-Modul (20) an das Betriebsgerät (10) zu übertragen.

2. LED-Modul nach Anspruch 1,
wobei das steuerbare Schaltmittel (31) eingerichtet ist, um einen Widerstand einer Verbindung zwischen dem Eingangsanschluss (21) und der wenigstens einen Leuchtdiode (25, 26) zu erhöhen.

3. LED-Modul nach Anspruch 2,
wobei das steuerbare Schaltmittel (31) zwischen den Eingangsanschluss (21) und eine Anode einer Leuchtdiode (25) geschaltet ist.

4. LED-Modul nach einem der vorhergehenden Ansprüche,
wobei das LED-Modul (20) so eingerichtet ist, dass das steuerbare Schaltmittel (31) eine elektrisch leitende Verbindung zwischen dem Eingangsanschluss (21) und der wenigstens einen Leuchtdiode (25, 26) abhängig von einer Eingangsspannung des LED-Moduls (20) unterbricht.

5. LED-Modul nach Anspruch 4,
wobei das LED-Modul (20) so eingerichtet ist, dass das steuerbare Schaltmittel (31) die elektrisch leitende Verbindung zwischen dem Eingangsanschluss (21) und der wenigstens einen Leuchtdiode (25, 26) unterbricht, wenn eine Eingangsspannung des LED-Moduls (20) größer als ein Schwellenwert (53) ist.

6. LED-Modul nach Anspruch 4 oder Anspruch 5,
wobei das LED-Modul (20) so eingerichtet ist, dass das steuerbare Schaltmittel (31) die elektrisch leitende Verbindung zwischen dem Eingangsanschluss (21) und der wenigstens einen Leuchtdiode (25, 26) für ein vorgegebenes Zeitintervall unterbricht.

7. LED-Modul nach einem der vorhergehenden Ansprüche,
wobei das LED-Modul (20) eingerichtet ist, um durch Unterbrechen einer elektrisch leitenden Verbindung zwischen dem Eingangsanschluss (21) und der wenigstens einen Leuchtdiode (25, 26) die wenigstens eine Leuchtdiode (25, 26) gegen eine Überspannung oder einen Überstrom zu schützen.

8. LED-Modul nach einem der vorhergehenden Ansprüche,
wobei das LED-Modul (20) so eingerichtet ist, dass das steuerbare Schaltmittel (31) eine elektrisch leitende Verbindung zwischen dem Eingangsanschluss (21) und der wenigstens einen Leuchtdiode (25, 26) in einem Standby-Modus unterbricht.

9. LED-Modul nach Anspruch 8,
wobei das LED-Modul (20) so eingerichtet ist, dass das steuerbare Schaltmittel (31) die elektrisch leitende Verbindung zwischen dem Eingangsanschluss (21) und der wenigstens einen Leuchtdiode (25, 26) unterbricht, wenn eine Eingangsspannung des LED-Moduls (20) kleiner als ein weiterer Schwellenwert (54) ist.

10. LED-Modul nacheinem der vorgehenden Ansprüche,
wobei die Steuerschaltung (32) eingerichtet ist, um das steuerbare Schaltmittel (31) abhängig von einer Eingangsspannung des LED-Moduls (20) zu schalten.

11. Leuchte, umfassend:
ein Betriebsgerät (10), insbesondere einen LED-Konverter, und
ein LED-Modul (20) nach einem der vorhergehenden Ansprüche, dessen Eingangsanschluss (21) über eine Versorgungsleitung mit dem Betriebsgerät (10) verbunden ist.

12. Leuchte nach Anspruch 11,
wobei das Betriebsgerät (10) eine Ausgangsanschluss (11, 12) und eine mit dem Ausgangsanschluss gekoppelte Auswerteschaltung (18) aufweist, die eingerichtet ist, um von dem LED-Modul (20) über die Versorgungsleitung übertragene Daten auszulesen.

13. Verfahren zum Betreiben eines LED-Moduls (20), das einen Eingangsanschluss (21) und wenigstens eine Leuchtdiode (25, 26) umfasst, wobei das Verfahren umfasst:
Schalten wenigstens eines steuerbaren Schaltmittels (31) des LED-Moduls (20), das mit dem Eingangsanschluss (21) und der wenigstens einen Leuchtdiode (25, 26) gekoppelt ist;
**gekennzeichnet dadurch, dass** das Verfahren ferner umfasst:
Steuern des steuerbaren Schaltmittels (31) durch eine Steuerschaltung (32), wobei die Steuerschaltung (32) das steuerbare Schaltmittel (31) abhängig von zu übertragenden Daten schaltet, um die zu übertragenden Daten über eine Versorgungsleitung des LED-Moduls (20) von dem LED-Modul (20) an das Betriebsgerät (10) zu übertragen.

## Claims

1. A LED module comprising,
at least one light-emitting diode (25, 26),
an input terminal (21) for coupling the LEED module (20) with an operating device (10) and
a controllable switching means (31), which is coupled to the input terminal (21) and the at least one light-emitting diode (25, 26),
**characterized in that** the LED module also comprises:
a control circuit (32) for controlling the controllable switching means (31), wherein the control circuit (32) is arranged, in order to connect the controllable switching means (31) depending on the data to be transmitted, in order to transmit the data to be transmitted from the LED module (20) to the operating device (10) via a supply line of the LED module (20).

2. A LED module according to Claim 1,
wherein the controllable switching means (31) is arranged, in order to increase a resistance of a connection between the input terminal (21) and the at least one light-emitting diode (25, 26).

3. A LED module according to Claim 2,
wherein the controllable switching means (31) is connected between the input terminal (21) and an anode of the light-emitting diode (25).

4. A LED module according to any one of the preceding claims,
wherein the LED module (20) is arranged such that the controllable switching means (31) interrupts an electrically conductive connection between the input terminal (21) and the at least one light-emitting diode (25, 26) depending on an input voltage of the LED module (20).

5. A LED module according to Claim 4,
wherein the LED module (20) is arranged such that the controllable switching means (31) interrupts the electrically conductive connection between the input terminal (21) and the at least one light-emitting diode (25, 26), if an input voltage of the LED module (20) is greater than a threshold value (53).

6. A LED module according to Claim 4 or Claim 5,
wherein the LED module (20) is arranged such that the controllable switching means (31) interrupts the electrically conductive connection between the input terminal (21) and the at least one light-emitting diode (25, 26) for a predetermined time interval.

7. A LED module according to any one of the preceding claims,
wherein the LED module (20) is arranged, in order to protect the at least one light-emitting diode (25, 26) against over overvoltage or an overcurrent by interrupting an electrically conductive connection between the input terminal (21) and the at least one light-emitting diode (25, 26).

8. A LED module according to any one of the preceding claims,
wherein the LED module (20) is arranged such that the controllable switching means (31) interrupts the electrically conductive connection between the input terminal (21) and the at least one light-emitting diode (25, 26) in a standby mode.

9. A LED module according to Claim 8,
wherein the LED module (20) is arranged such that the controllable switching means (31) interrupts the electrically conductive connection between the input terminal (21) and the at least one light-emitting diode (25, 26), if an input voltage of the LED module (20) is less than a further threshold value (54).

10. A LED module according to any one of the preceding claims,
wherein the control circuit (32) is arranged, in order to connect the controllable switching means (31) depending on an input voltage of the LED module (20).

11. A lamp, comprising:
an operating device (10), in particular a LED converter, and a LED module (20) according to any one of the preceding claims, the input terminal (21) of which is connected with the operating device (10) via a supply line.

12. A lamp, according to Claim 11,
wherein the operating device (10) has an output terminal (11, 12) and an evaluation circuit (18) coupled with the output terminal, which is arranged, in order to read out data transmitted from the LED module (20) via the supply line.

13. A method for the operation of a LED module (20), which comprises an input terminal (21) and at least one light-emitting diode (25, 26), wherein the method comprises:
Connecting at least one controllable switching means (31) of the LED module (20), which is coupled with the input terminal (21) and the at least one light-emitting diode (25, 26);
**characterized in that** the method also comprises:
controlling the controllable switching means (31) by a control circuit (32), wherein the control circuit (32) connects the controllable switching means (31) depending on data to be transmitted, in order to transmit the data to be transmitted from the LED module (20) to the operating device (10) via a supply line of the LED module (20).

## Revendications

1. Module à LED comprenant :
au moins une diode électroluminescente (25, 26),
un raccord d'entrée (21) pour le couplage du module à LED (20) avec un dispositif d'exploitation (10) et
un moyen de commutation contrôlable (31), qui est couplé avec le raccord d'entrée (21) et l'au moins une diode électroluminescente (25, 26),
**caractérisé en ce que** le module à LED comprend en outre :
un circuit de commande (32) pour la commande du moyen de commutation contrôlable (31), le circuit de commande (32) étant conçu pour commuter le moyen de commutation contrôlable (31) en fonction de données à transmettre, afin de transmettre les données à transmettre, par l'intermédiaire d'une ligne d'alimentation du module à LED (20), du module à LED (20) au dispositif d'exploitation (10).

2. Module à LED selon la revendication 1,
le moyen de commutation contrôlable (31) étant conçu pour augmenter une résistance d'une connexion entre le raccord d'entrée (21) et l'au moins une diode électroluminescente (25, 26).

3. Module à LED selon la revendication 2,
le moyen de commutation contrôlable (31) étant branché entre le raccord d'entrée (21) et une anode d'une diode électroluminescente (25).

4. Module à LED selon l'une des revendications précédentes,
le module à LED (20) étant conçu de façon à ce que le moyen de commutation contrôlable (31) interrompe une liaison électro-conductrice entre le raccord d'entrée (21) et l'au moins une diode électroluminescente (25, 26) en fonction d'une tension d'entrée du module à LED (20).

5. Module à LED selon la revendication 4,
le module à LED (20) étant conçu de façon à ce que le moyen de commutation contrôlable (31) interrompe la liaison électro-conductrice entre le raccord d'entrée (21) et l'au moins une diode électroluminescente (25, 26) lorsqu'une tension d'entrée du module à LED (20) est supérieure à une valeur seuil (53).

6. Module à LED selon la revendication 4 ou la revendication 5,
le module à LED (20) étant conçu de façon à ce que le moyen de commutation contrôlable (31) interrompe la liaison électro-conductrice entre le raccord d'entrée (21) et l'au moins une diode électroluminescente (25, 26) pour un intervalle de temps prédéterminé.

7. Module à LED selon l'une des revendications précédentes,
le module à LED (20) étant conçu pour protéger l'au moins une diode électroluminescente (25, 26) contre une surtension ou une surintensité grâce à l'interruption d'une liaison électro-conductrice entre le raccord d'entrée (21) et l'au moins une diode électroluminescente (25, 26).

8. Module à LED selon l'une des revendications précédentes,
le module à LED (20) étant conçu de façon à ce que le moyen de commutation contrôlable (31) interrompe une liaison électro-conductrice entre le raccord d'entrée (21) et l'au moins une diode électroluminescente (25, 26) dans un mode de veille.

9. Module à LED selon la revendication 8,
le module à LED (20) étant conçu de façon à ce que le moyen de commutation contrôlable (31) interrompe la liaison électro-conductrice entre le raccord d'entrée (21) et l'au moins une diode électroluminescente (25, 26) lorsqu'une tension d'entrée du module à LED (20) est inférieure à une valeur seuil supplémentaire (54).

10. Module à LED selon l'une des revendications précédentes,
le circuit de commande (32) étant conçu pour commuter le moyen de commutation contrôlable (31) en fonction d'une tension d'entrée du module à LED (20).

11. Luminaire comprenant :
un dispositif d'exploitation (10), plus particulièrement un convertisseur à LED et un module à LED (20) selon l'une des revendications précédentes, dont le raccord d'entrée (21) est relié avec le dispositif d'exploitation (10) par l'intermédiaire d'une ligne d'alimentation.

12. Luminaire selon la revendication 11,
le dispositif d'exploitation (10) comprenant un raccord de sortie (11, 12) et un circuit d'analyse (18), couplé avec le raccord de sortie, qui est conçu pour lire les données transmises par le module à LED (20) par l'intermédiaire de la ligne d'alimentation.

13. Procédé d'exploitation d'un module à LED (20), qui comprend un raccord d'entrée (21) et au moins une diode électroluminescente (25, 26), ce procédé comprenant :
la commutation d'au moins un moyen de commutation contrôlable (31) du module à LED (20), qui est couplé avec le raccord d'entrée (21) et l'au moins une diode électroluminescente (25, 26) ;
**caractérisé en ce que** le procédé comprend en outre :
la commande du moyen de commutation contrôlable (31) par un circuit de commande (32), le circuit de commande (32) commutant le moyen de commutation contrôlable (31) en fonction de données à transmettre, afin de transmettre les données à transmettre du module à LED (20) au dispositif d'exploitation (10) par l'intermédiaire d'une ligne d'alimentation du module à LED (20).
